# EUROPÄISCHE PATENTSCHRIFT

(11) **EP 3 354 914 B1**
(45) Veröffentlichungstag und Bekanntmachung des Hinweises auf die Patenterteilung: **19.12.2018**
(21) Anmeldenummer: 17154010.7
(22) Anmeldetag: 31.01.2017
(51) Int. Cl.: F16B 37/04

(54) **KÄFIGMUTTER MIT ELASTISCHER KUNSTSTOFFVERBINDUNGSBUCHSE**
CAGE NUT HAVING AN ELASTIC AND PLASTIC SLEEVE
ÉCROU DE CAGE POURVU D'UNE DOUILLE ÉLASTIQUE ET PLASTIQUE

(43) Veröffentlichungstag der Anmeldung: 01.08.2018
(73) Patentinhaber: Nedschroef Schrozberg GmbH, 74575 Schrozberg (DE)
(72) Erfinder: Heynold, Bruno, 91631 Wettringen (DE)
(74) Vertreter: Patentanwälte Dörner & Kötter PartG mbB

(56) Entgegenhaltungen:
- WO-A1-2012/084163
- DE-U1-202011 107 965
- KR-B1- 101 695 609

## Beschreibung

Die Erfindung betrifft eine Käfigmutter, umfassend eine Mutter mit einem radial überstehenden, zwei parallel zueinander gegenüberliegend angeordnete Seitenflächen aufweisenden Flansch und einer hülsenartigen Schraubenaufnahme, ein Halteblech mit einem an zwei gegenüberliegenden Seiten parallel zueinander angeordnete rechtwinklig abgekantete Schenkel aufweisenden Deckblech, das mit einer Durchtrittsöffnung versehen ist, die von der Schraubenaufnahme der Mutter durchdrungen ist, sowie eine Verbindungsbuchse, welche die Schraubenaufnahme der Mutter umschließt und die an einem Ende einen ersten Kragen zur Anlage des Flansches der Mutter und an ihrem gegenüberliegenden Ende einen zweiten Kragen aufweist, welche Kragen das Deckblech des Halteblechs beidseitig im Bereich der Durchtrittsöffnung bereichsweise abdecken.

Eine derartige Käfigmutter ist aus der WO 2012/084163 A1 bekannt. Solche Käfigmuttern finden als Teil einer Schrauben-Muttern-Verbindung Verwendung, über welche zu montierende Bauteile an einem Widerlager festgelegt werden. Zur Vereinfachung der Montage wird die Käfigmutter beispielsweise an der Karosserie eines Fahrzeugs angeschweißt. Beim späteren Eindrehen der Schraube in das Mutterngewinde bietet das Halteblech eine drehfeste Abstützung für die Mutter. Gleichzeitig verhindert das als Käfig wirkende Halteblech ein Ausweichen der Mutter in axialer Richtung der Schraube. Zum Einsetzen der die Verbindungsbuchse aufnehmenden Mutter in das Halteblech ist dieses an einer Querseite geschlitzt ausgeführt. Zusätzliche Fixierwerkzeuge sind zum Eindrehen der Schraube in die Mutter nicht erforderlich. Nachteilig an der vorbekannten Käfigmutter ist, dass diese relativ aufwendig zu montieren ist. Zudem ist eine freie Zugänglichkeit des in dem Halteblech vorgesehenen Schlitzes zum Einführen der die Mutter aufnehmenden Verbindungsbuchse in das Halteblech erforderlich. Eine weitere gattungsgemäße Käfigmutter ist in der KR 101 695 609 B1 gezeigt.

Hier will die Erfindung Abhilfe schaffen. Der Erfindung liegt die Aufgabe zugrunde, eine Käfigmutter bereitzustellen, deren Montierbarkeit verbessert ist. Gemäß der Erfindung wird diese Aufgabe dadurch gelöst, dass der zweite Kragen zumindest bereichsweise in Richtung des ersten Kragens gewölbt ausgebildet ist, wobei der zweite Kragen gegenüber der Durchtrittsöffnung ein Übermaß aufweist.

Mit der Erfindung ist eine Käfigmutter bereitgestellt, deren Montierbarkeit verbessert ist. Dadurch, dass der zweite Kragen elastisch sowie zumindest bereichsweise in Richtung des ersten Kragens gewölbt ausgebildet ist und gegenüber der Durchtrittsöffnung ein Übermaß aufweist, ist ein pilzkopfartiger Körper ausgebildet, durch den ein Verrasten der Verbindungsbuchse mit dem Halteblech durch Hindurchpressen des gewölbt ausgebildeten elastischen zweiten Kragens durch die Durchtrittsöffnung des Halteblechs ermöglicht. Nach Passieren der Durchtrittsöffnung nimmt der Kragen seine ursprüngliche Form wieder an, wodurch die Verbindungsbuchse in dem Halteblech unverlierbar gehalten ist. Die bei der vorbekannten Käfigmutter erforderliche seitliche Zugänglichkeit des Halteblechs zur Einführung der Verbindungsbuchse entfällt. Dabei ist die hülsenartige Schraubenaufnahme vorzugsweise mit einem Innengewinde versehen. Zur Verwendung mit einer gewindefurchenden Schraube kann dieses jedoch auch entfallen.

In Weiterbildung der Erfindung überragt der zweite Kragen den ersten Kragen in Richtung dessen Längsachse zumindest bereichsweise. Dabei ist der zweite Kragen vorzugsweise zur Längsmittelachse des ersten Kragens symmetrisch ausgebildet. Hierdurch ist eine gleichmäßige, axial ausgerichtete Halterung der Mutter in dem Halteblech erzielt.

In Ausgestaltung der Erfindung ist der zweite Kragen geschlitzt ausgeführt. Hierdurch ist die Komprimierbarkeit des als Pilzkopf fungierenden zweiten Kragens beim Durchpressen durch die Durchtrittsöffnung des Halteblechs erhöht.

In weiterer Ausgestaltung der Erfindung ist der zweite Kragen aus einem rechteckigen Teil gebildet, an dessen Längsseiten jeweils ein in Richtung des ersten Kragens gewölbter Flügel angeformt ist. Hierdurch ist eine gute Auflage des zweiten Kragens auf der Oberseite des Halteblechs erzielt. Dabei sind die Flügel bevorzugt an ihrem äußeren Ende abgerundet. Besonders bevorzugt weisen die Flügel jeweils eine Kreisabschnittsform auf.

In Weiterbildung der Erfindung weist die Verbindungsbuchse an ihrem dem zweiten Kragen zugewandten Ende an ihrer Innenmantelfläche wenigstens zwei, bevorzugt wenigstens drei Einbuchtungen auf, die sich vorzugsweise bis in den zweiten Kragen hinein erstrecken. Diese Einbuchtungen dienen der Aufnahme von durch in die Schraubenaufnahme der Mutter eingebrachten Einstemmungen 34, wodurch die Mutter verliersicher in der Verbindungsbuchse gehalten ist.

In weiterer Ausgestaltung der Erfindung weist die Verbindungsbuchse an ihrer Innenmantelfläche wenigstens zwei, bevorzugt wenigstens drei Führungsrippen auf. Hierdurch ist die Durchführung der Schraubenaufnahme der Mutter durch die Verbindungsbuchse erleichtert.

In Weiterbildung der Erfindung weist der erste Kragen an seiner dem zweiten Kragen zugewandten Seite wenigstens zwei Federlaschen auf. Hierdurch ist eine gleichmäßige Vorspannung bewirkt, wodurch eine axiale Ausrichtung der Verbindungsbuchse erzielt ist.

In weiterer Ausgestaltung der Erfindung weist die Durchführung des Halteblechs eine ovale Kontur auf. Hierdurch ist eine Verschiebbarkeit der Mutter entlang des Deckblechs des Halteblechs erzielt, wodurch ein Toleranzausgleich ermöglicht ist. Dabei ist die Durchführung des Halteblechs bevorzugt symmetrisch ausgebildet, wobei deren Symmetrieachse auf der Längsmittelachse des Halteblechs verläuft. Hierdurch ist eine Verschiebbarkeit entlang der Längsmittelachse des Halteblechs gewährleistet.

In Weiterbildung der Erfindung ist die Verbindungsbuchse als einteiliges elastisches Kunststoffteil ausgebildet. Hierdurch ist eine elektrische Entkopplung der Mutter von dem Halteblech erzielt. Nach Befestigung der Käfigmutter beispielsweise an einer Karosserie eines Fahrzeugs wird das komplette Fahrzeugbauteil lackiert. Im Zuge des Lackierervorgangs eines Karosserieteils wird der aufzutragende Lack elektrisch geladen, wobei das zu lackierende Bauteil entgegengesetzt zum aufgetragenen Lack gepolt wird. Hierdurch ist bewirkt, dass der Lack definiert auf allen Bauteilen anhaftet, welche während des Lackierprozesses unter Strom stehen. Durch die elektrische Entkopplung der Mutter von dem Halteblech wird ein Verkleben der Mutter innerhalb des Halteblechs vermieden, wodurch die Funktion eines Toleranzausgleichs der innerhalb des Halteblechs schwimmend gelagerten Mutter beeinträchtigt würde. Zudem ist verhindert, dass das Gewinde der Mutter mit Lack zugesetzt wird, wodurch ein Einbringen einer Schraube in die Mutter verhindert würde. Darüber hinaus sind durch die Ausbildung der Verbindungsbuchse als einteiliges Kunststoffteil Klappergeräusche des von dieser aufgenommenen Mutter vermieden. Dies ist insbesondere bei optional in einem Fahrzeug vorgesehenen Käfigmuttern wichtig, da ansonsten im Betrieb des Fahrzeuges die in dem Halteblech frei bewegliche Mutter metallische Klappergeräusche verursachen würde.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Käfigmutter
a) in räumlicher Darstellung;
b) in einer räumlichen Ansicht von unten;
c) in der Draufsicht;
d) in der Ansicht von vorne;
e) in der Seitenansicht;
f) in Längsschnittdarstellung;

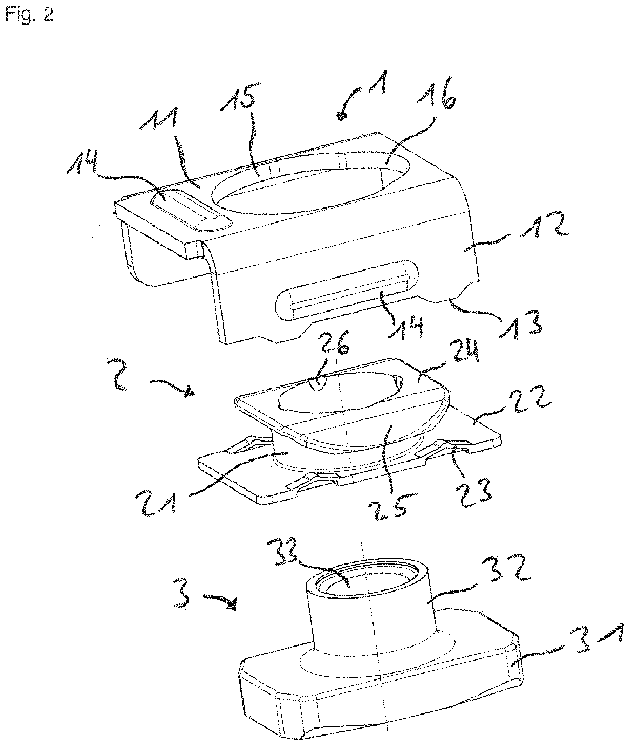

- Figur 2: die schematische Darstellung der Käfigmutter aus Figur 1 in Explosionsdarstellung;

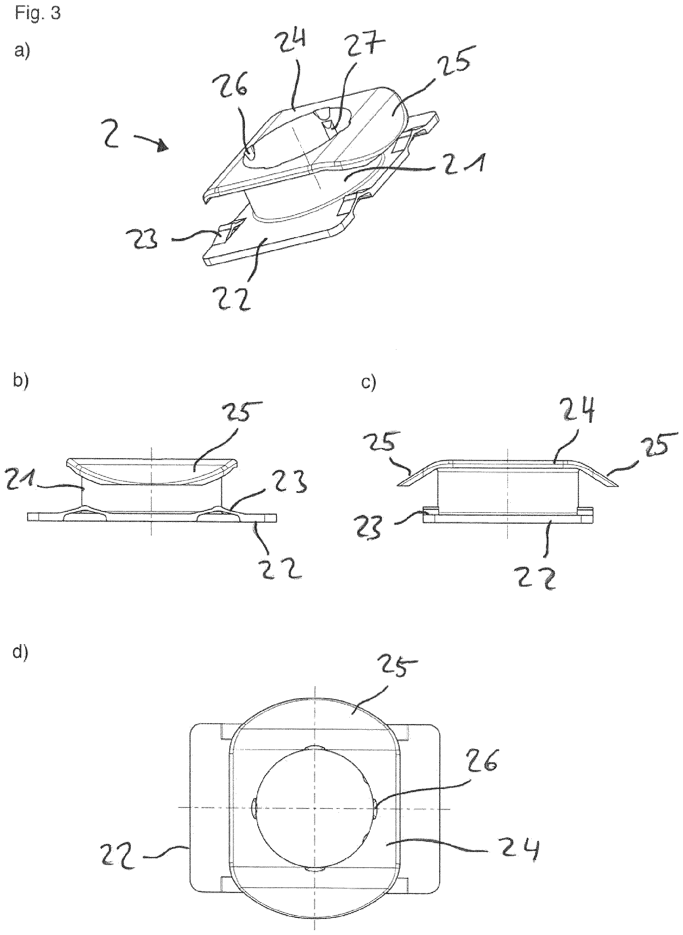

- Figur 3: die schematische Darstellung der Verbindungsbuchse der Käfigmutter aus Figur 1
a) in räumlicher Darstellung;
b) in der Seitenansicht;
c) in der Ansicht von vorne;
d) in der Draufsicht.

Die als Ausführungsbeispiel gewählte Käfigmutter ist genau aus drei Teilen gebildet, nämlich aus einem Halteblech 1, das von einer Verbindungsbuchse 2 durchdrungen ist, die eine Mutter 3 aufnimmt.

Das Halteblech 1 ist im Ausführungsbeispiel als metallisches Stanzteil ausgebildet, mit einem Deckblech 11, das an zwei gegenüberliegenden Seiten abgekantet ist, wodurch zwei gegenüberliegend angeordnete, orthogonal an das Deckblech 11 angestellte Schenkel 12 gebildet sind. An ihrer freien Längsseite sind an die Schenkel 12 jeweils nasenartige Schweißfüße 13 angeformt. Zur Erhöhung der Stabilität des Halteblechs sind die Schenkel 12 sowie auch das Deckblech 11 jeweils mit einer Sicke 14 versehen. In den Schenkeln 12 verläuft die Sicke 14 in Längsrichtung; auf dem Deckblech 11 ist die Sicke 14 in Querrichtung angeordnet. In das Deckblech 11 ist weiterhin eine im wesentlichen kreisrunde Durchtrittsöffnung 15 eingebracht, die in eine kreisabschnittförmige Einbuchtung 16 übergeht, wodurch eine im wesentlichen ovale Kontur gebildet ist, die symmetrisch ausgebildet ist, wobei deren Symmetrieachse auf der Längsmittelachse des Halteblechs 1 verläuft. Der Radius der Einbuchtung 16 entspricht dabei im Wesentlichen dem Radius des Hülsenteils 21 der Verbindungsbuchse 2. Alternativ ist beispielsweise auch eine Ausbildung der Durchtrittsöffnung 15 in Art eines Langlochs möglich. Wesentlich ist, dass eine zumindest axiale Verschiebbarkeit des Hülsenteils 21 innerhalb der Durchtrittsöffnung 15 gewährleistet ist.

Die Verbindungsbuchse 2 ist im Ausführungsbeispiel als einstückiges flexibles Kunststoffspritzgussteil hergestellt. Sie besteht im Wesentlichen aus einem Hülsenteil 21, an das endseitig ein erster Kragen 22 zur Anlage des Flansches 31 der Mutter 3 angeformt ist. Der erste Kragen 22 ist in Art einer quaderförmigen Platte ausgebildet, deren Ecken abgerundet ausgebildet sind. An den beiden Längsseiten des ersten Kragen 22 sind jeweils beabstandet zueinander zwei Federlaschen 23 angeformt.

An seinem dem ersten Kragen 22 gegenüberliegenden Ende ist an das Hülsenteil 21 parallel zu dem ersten Kragen 22 ein zweiter Kragen 24 angeformt. Der zweite Kragen 24 ist aus einem im Wesentlichen rechteckigen Mittelteil gebildet, an dessen Längsseiten jeweils ein in Richtung des ersten Kragens 22 gewölbter, kreisabschnittsförmig ausgebildeter Flügel 25 angeformt ist. Der so ausgebildete zweite Kragen 24 überragt die beiden Längsseiten des ersten Kragens 22, dessen Querseiten wiederum die beiden Längsseiten des zweiten Kragens 24 überragen, so dass sich in Draufsicht eine kreuzförmige Anordnung der beiden Kragen 22, 24 ergibt.

Das Hülsenteil 21 der Verbindungsbuchse 2 ist an ihrem dem zweiten Kragen 24 zugewandten Ende an ihrer Innenmantelfläche mit vier Einbuchtungen 26 versehen, die jeweils um 90 Grad versetzt zueinander angeordnet sind und die sich jeweils bis in den zweiten Kragen 24 hinein erstrecken. Axial beabstandet zu den Einbuchtungen 26 sind zentriert zu diesen weiterhin vier ebenfalls um 90 Grad versetzt zueinander angeordnete Führungsrippen 27 an die Innenmantelfläche des Hülsenteils 21 angeformt. Die Führungsrippen 27 sind derart ausgebildet, das eine axiale Durchführung der Schraubenaufnahme 32 der Mutter 3 zwischen diesen mit Spiel ermöglicht ist.

Die Mutter 3 weist einen im Wesentlichen quaderförmigen Flansch 31 auf, aus dem orthogonal zu diesem eine Schraubenaufnahme 32 herausragt. Die Mutter 3 weist ein durchgängiges Innengewinde 33 auf, das sich von der Flanschunterseite aus, bis zu dem herausragenden Ende der Schraubenaufnahme 32 erstreckt.

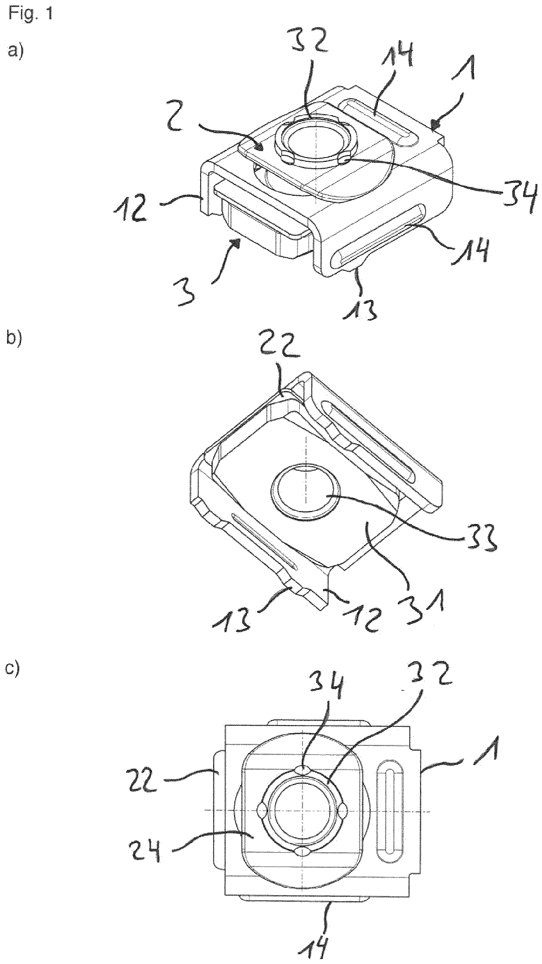

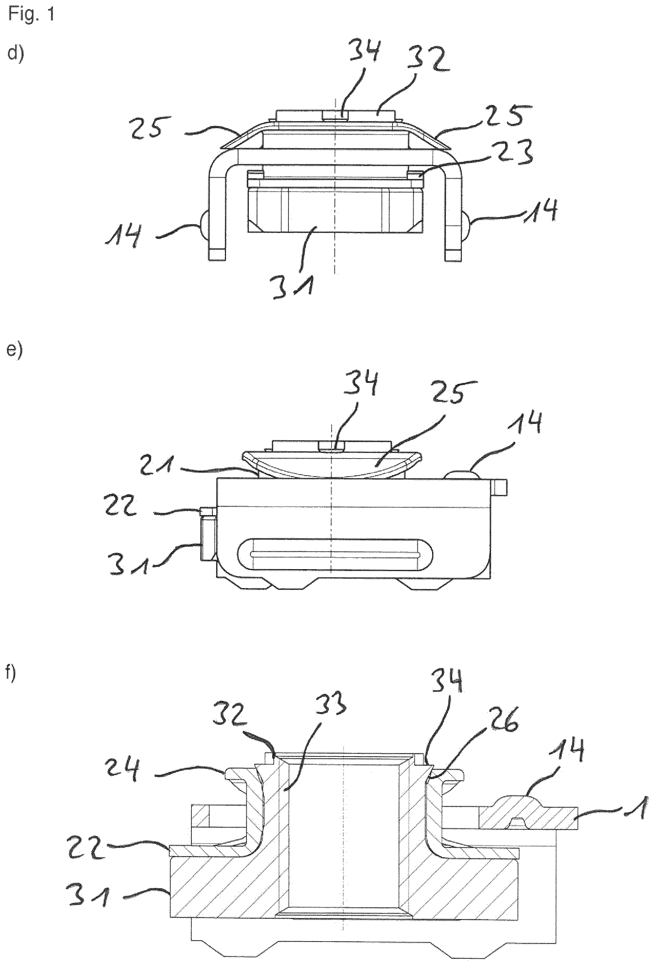

Die Verbindungsbuchse 2 ist mit Ihrem zweiten Kragen 24 durch die Durchtrittsöffnung 15 des Halteblechs 1 hindurchgepresst, wonach die Flügel 25 die Durchtrittsöffnung 15 bereichsweise überdecken. Die Mutter 3 ist derart in das Hülsenteil 21 der Verbindungsbuchse 2 zwischen den Führungsrippen 27 eingeführt, dass der Flansch 31 an dem ersten Kragen 22 anliegt, wobei die Schraubenaufnahme 32 den Hülsenteil 21 überragt. Endseitig ist die Schraubenaufnahme 32 nach der Montage der Käfigmutter in Flucht mit den Einbuchtungen 26 der Verbindungsbuchse 2 mit Einstemmungen 34 versehen, die in diese Einbuchtungen 26 hineinragen. Die Mutter 3 ist hierdurch verliersicher und drehfest in der Verbindungsbuchse 2 gehalten (vgl. Figur 1). Die Verbindungsbuchse 2 ist mit der in dieser gehaltenen Mutter 3 längsverschieblich in der in die Einbuchtung 16 mündenden Durchtrittsöffnung 15 geführt. Die Mutter 3 ist so in dem Halteblech 1 mit Spiel gehalten, wodurch Montagetoleranzen, die zwischen zu montierenden Bauteilen und den in der Karosserie eines Fahrzeugs vorgesehenen mit einer erfindungsgemäßen Käfigmutter versehenem Befestigungsstellen ausgeglichen werden können. Durch die an dem ersten Kragen 22 der Verbindungsbuchse 2 angeformten Federlaschen, die gegen das Deckblech 11 vorgespannt sind, ist eine Kippbewegung der Mutter 3 relativ zum Halteblech 1 verhindert. Hierdurch ist die Gefahr vermieden, dass durch eine Kippbewegung der Mutter das Eindrehen eines Schraubenbolzens in koaxialer Richtung in das Innengewinde 33 der Mutter 3 erschwert wird.

## Patentansprüche

1. Käfigmutter, umfassend eine Mutter (3) mit einem radial überstehenden, zwei parallel zueinander gegenüberliegend angeordnete Seitenflächen aufweisenden Flansch (31) und einer hülsenartigen Schraubenaufnahme (32), ein Halteblech (1) mit einem an zwei gegenüberliegenden Seiten parallel zueinander angeordnete rechtwinklig abgekantete Schenkel (12) aufweisenden Deckblech (11), das mit einer Durchtrittsöffnung (15) versehen ist, die von der Schraubenaufnahme (32) der Mutter (3) durchdrungen ist, sowie eine Verbindungsbuchse (2), welche die Schraubenaufnahme (32) der Mutter (3) umschließt und die an einem Enden einen ersten Kragen (22) zur Anlage des Flansches (31) der Mutter (3) und an ihrem gegenüberliegenden Ende einen zweiten Kragen (24) aufweist, welche Kragen (22, 24) das Deckblech (11) des Halteblechs (1) beidseitig im Bereich der Durchtrittsöffnung (15) bereichsweise abdecken, **dadurch gekennzeichnet, dass** der zweite Kragen (24) elastisch sowie zumindest bereichsweise in Richtung des ersten Kragens (22) gewölbt ausgebildet ist, wobei der zweite Kragen (24) gegenüber der Durchtrittsöffnung (15) ein Übermaß aufweist, derart, dass er durch die Durchtrittsöffnung (15) hindurchpressbar ist, wonach er seine ursprüngliche Form wieder annimmt.

2. Käfigmutter nach Anspruch 1, **dadurch gekennzeichnet, dass** der zweite Kragen (24) den ersten Kragen (22) in Richtung dessen Längsseite zumindest bereichsweise überragt.

3. Käfigmutter nach einem der vorgenannten Ansprüche, **dadurch gekennzeichnet, dass** der zweite Kragen (24) zur Längsmittelachse des ersten Kragens (22) symmetrisch ausgebildet ist.

4. Käfigmutter nach einem der vorgenannten Ansprüche, **dadurch gekennzeichnet, dass** der zweite Kragen (24) geschlitzt ausgeführt ist.

5. Käfigmutter nach einem der vorgenannten Ansprüche, **dadurch gekennzeichnet, dass** der zweite Kragen (24) aus einem rechteckigen Teil gebildet ist, an dessen Längsseiten jeweils ein in Richtung des ersten Kragens gewölbter Flügel (25) angeformt ist.

6. Käfigmutter nach Anspruch 5, **dadurch gekennzeichnet, dass** die Flügel (25) an ihrem äußeren Ende abgerundet sind, wobei die Flügel (25) bevorzugt eine Kreisabschnittsform aufweisen.

7. Käfigmutter nach einem der vorgenannten Ansprüche, **dadurch gekennzeichnet, dass** die Verbindungsbuchse (2) an ihrem dem zweiten Kragen (24) zugewandten Ende an ihrer Innenmantelfläche wenigstens zwei, bevorzugt wenigstens drei Einbuchtungen (26) aufweist, die sich vorzugsweise bis in den zweiten Kragen (24) hinein erstrecken.

8. Käfigmutter nach einem der vorgenannten Ansprüche, **dadurch gekennzeichnet, dass** die Verbindungsbuchse (2) an ihrer Innenmantelfläche wenigstens zwei, bevorzugt wenigstens drei Führungsrippen (27) aufweist.

9. Käfigmutter nach einem der vorgenannten Ansprüche, **dadurch gekennzeichnet, dass** der erste Kragen (22) an seiner dem zweiten Kragen (24) zugewandten Seite wenigstens zwei Federlaschen (23) aufweist.

10. Käfigmutter nach einem der vorgenannten Ansprüche, **dadurch gekennzeichnet, dass** die Durchführung (15) des Halteblechs (1) eine längliche, bevorzugt ovale Kontur aufweist.

11. Käfigmutter nach Anspruch 9, **dadurch gekennzeichnet, dass** die Durchführung (15) des Halteblechs (1) symmetrisch ausgebildet ist, wobei deren Symmetrieachse auf der Längsmittelachse des Halteblechs (1) verläuft.

12. Käfigmutter nach einem der vorgenannten Ansprüche, **dadurch gekennzeichnet, dass** die Verbindungsbuchse (2) als einteiliges Kunststoffteil ausgebildet ist.

## Claims

1. Cage nut comprising a nut (3) having a radially projecting flange (31) with two side surfaces arranged in parallel on opposite sides, and a sleeve-like screw receptacle (32), a holding plate (1) having a cover plate (11) with limbs (12) arranged in parallel on two opposite sides and folded at right angles, which is provided with a through opening (15), which is penetrated by the screw receptacle (32) of the nut (3), as well as a connecting bush (2), which surrounds the screw receptacle (32) of the nut (3) and which has a first collar (22) for abutment of the flange (31) of the nut (3) on one end and on the opposite end a second collar (24), which collars (22, 24) partially cover the cover plate (11) of the holding plate (1) on both sides in the area of the through opening (15), **characterised in that** the second collar (24) is elastic as well as at least partially curved in the direction of the first collar (22), wherein the second collar (24) is oversized with respect to the through opening (15) in such a manner that it can be pressed through the through opening (15), after which it reverts to its original shape.

2. Cage nut according to claim 1, **characterised in that** the second collar (24) at least partially protrudes beyond the first collar (22) in the direction of its longitudinal side.

3. Cage nut according to one of the previous claims, **characterised in that** the second collar (24) is of symmetrical design with respect to the longitudinal central axis of the first collar (22).

4. Cage nut according to one of the previous claims, **characterised in that** the second collar (24) is of slotted design.

5. Cage nut according to one of the previous claims, **characterised in that** the second collar (24) is formed by a rectangular part, on the longitudinal sides of which a wing (25) is respectively moulded which arches in the direction of the first collar.

6. Cage nut according to claim 5, **characterised in that** the wings (25) are rounded at their outer end, wherein the wings (25) preferably have the shape of a segment of a circle.

7. Cage nut according to one of the previous claims, **characterised in that** the connecting bush (2), on its inner surface area, has at least two, preferably at least three indentations (26) at its end facing the second collar (24), which preferably extend into the second collar (24).

8. Cage nut according to one of the previous claims, **characterised in that** the connecting bush (2) has at least two, preferably at least three guide ribs (27) on its inner surface area.

9. Cage nut according to one of the previous claims, **characterised in that** the first collar (22) has at least two spring tabs (23) on its side facing the second collar (24).

10. Cage nut according to one of the previous claims, **characterised in that** the through opening (15) of the holding plate (1) has an elongated, preferably oval contour.

11. Cage nut according to claim 9, **characterised in that** the through opening (15) of the holding plate (1) is of symmetrical design, wherein its axis of symmetry runs on the longitudinal central axis of the holding plate (1).

12. Cage nut according to one of the previous claims, **characterised in that** the connecting bush (2) is designed as a one-piece plastic part.

## Revendications

1. Écrou cage comprenant un écrou (3) avec une bride (31) en saillie radiale présentant deux surfaces latérales parallèles se faisant réciproquement face et un logement (32) de vis en forme de douille (32), une tôle de retenue (1) avec une tôle couvercle (11) présentant deux pans (12) à bords coudés à angle droit disposés parallèles sur deux côtés se faisant face, tôle qui est munie d'un orifice de passage (15) traversé par le logement (32) de vis de l'écrou (3), ainsi que comprenant une douille de liaison (2) qui entoure le logement (32) de vis de l'écrou (3) et qui présente à une extrémité un premier collet (22) sur lequel applique la bride (31) de l'écrou (3) et un deuxième collet (24) sur son extrémité opposée, lesquels collets (22, 24) recouvrent localement la tôle couvercle (11) de la tôle de retenue (1) des deux côtés dans la zone de l'orifice de passage (15), **caractérisé en ce que** le deuxième collet (24) est configuré élastique ainsi qu'au moins localement bombé en direction du premier collet (22), sachant que le deuxième collet (24) présente une surcote par rapport à l'orifice de passage (15), de sorte qu'il est possible de le faire passer à travers l'orifice de passage (15) en exerçant une pression, ce après quoi il reprend sa forme d'origine.

2. Écrou cage selon la revendication 1, **caractérisé en ce que** le deuxième collet (24) dépasse au moins localement le premier collet (22) en direction de son côté longitudinal.

3. Écrou cage selon l'une des revendications précédentes, **caractérisé en ce que** le deuxième collet (24) est configuré symétrique à l'axe longitudinal médian du premier collet (22).

4. Écrou cage selon l'une des revendications précédentes, **caractérisé en ce que** le deuxième collet (24) est configuré fendu.

5. Écrou cage selon l'une des revendications précédentes, **caractérisé en ce que** le deuxième collet (24) est formé à partir d'une pièce rectangulaire contre les côtés longitudinaux de laquelle est modelée une ailette (25) bombée en direction du premier collet.

6. Écrou cage selon la revendication 5, **caractérisé en ce que** les ailettes (25) présentent une extrémité extérieure arrondie, sachant que les ailettes (25) présentent de préférence la forme d'un arc de cercle.

7. Écrou cage selon l'une des revendications précédentes, **caractérisé en ce que** la douille de liaison (2) présente en son extrémité regardant le deuxième collet (24), sur sa surface enveloppante intérieure, au moins deux, de préférence au moins trois échancrures (26) qui s'étendent de préférence jusque dans le deuxième collet (24).

8. Écrou cage selon l'une des revendications précédentes, **caractérisé en ce que** la douille de liaison (2) présente, sur sa surface enveloppante intérieure, au moins deux, de préférence au moins trois ailettes de guidage (27).

9. Écrou cage selon l'une des revendications précédentes, **caractérisé en ce que** le premier collet (22) présente, sur son côté regardant le deuxième collet (24), au moins deux pattes ressorts (23).

10. Écrou cage selon l'une des revendications précédentes, **caractérisé en ce que** le passage (15) que présente la tôle de retenue (1) présente un contour oblong, de préférence ovale.

11. Écrou cage selon la revendication 9, **caractérisé en ce que** le passage (15) que présente la tôle de retenue (1) est configuré symétrique, sachant que son axe de symétrie est superposé à l'axe longitudinal médian de la tôle de retenue (1).

12. Écrou cage selon l'une des revendications précédentes, **caractérisé en ce que** la douille de liaison (2) est configurée comme pièce monobloc en matière plastique.
